# EUROPEAN PATENT APPLICATION

(11) **EP 2 824 509 A1**
(43) Date of publication of application: **14.01.2015**
(21) Application number: 13195779.7
(22) Date of filing: 05.12.2013
(51) Int. Cl.: G02F 1/361

(54) **Poled nonlinear polymeric material**

(30) Priority: 10.07.2013 LV 130093
(71) Applicant: Rigas Tehniska universitate, Riga 1658 (LV); Latvijas Universitates Cietvielu fizikas instituts, 1063 Riga (LV)
(72) Inventor: Gaidukovs, Sergejs, LV 1084 R ga (LV); Kampars, Valdis, LV-1082 R ga (LV); Rutkis, M rti, LV-1079 R ga (LV); Niti s, Edgars, LV-1013 R ga (LV); Tokmakovs, Andrejs, LV-1055 R ga (LV)
(74) Representative: Fortuna, Jevgenijs

(57) **Abstract**

This invention relates to the polymeric nonlinear optical materials, and more specifically to the thin film chromophore-functionalized poled polysulfone. *Guest-host* or dye/polymer-based electrooptic materials have distinct advantages over existing RF communications materials in terms of cost, weight, size, bandwidth, production technology and immunity to electromagnetic interference. Disadvantages of these materials are connected with a low thermal stability allowing the relaxation of the chromophore orientation what results in loss of second harmonic generation. The proposed method of preparing of films of chromophoric polysulfones allows obtaining nonlinear optical materials with high second harmonic generation efficiencies and high thermal stability. Better SHG thermal stability is provided by high glass transition temperature of polysulfone.

## Description

### Technical Field

The invention relates to optic and photonic materials and can be used for nonlinear optical (NLO) material production, which are used in various devices such as optical modulators.

### Background Art

A material with nonlinear optical properties must meet the following requirements: it should provide a stable second harmonic effect; it should maintain a stable nonlinear optical effect at room temperature and elevated temperatures; it should be characterized by the nonlinear optical effect stability at stationary electric field.

Depending on the nature of the material and its structure NLO materials are traditionally divided into several groups: inorganic crystals with NLO properties [1], organic materials with NLO properties - high molecular weight compounds (polymers) containing chromophore groups at basic chain or branch chains [2, 3], organic materials with NLO properties - low molecular weight additives, the so-called host-guest systems [2-4] contained in matrix from high molecular weight compounds (polymers), organic glass [5].

The cheapest and the technologically simplest obtainable materials are low molecular weight additives, the so-called guest-host systems [2-4] contained in high molecular weight compounds (polymers) matrices.

It should be noted that main advantages of polymer compared with mineral and glass-type materials is their low cost, relatively simple optically active polymer production and the diversity of their characteristics. Polymers can be converted into optically active polymers simply by adding organic low molecular substances with nonlinear optical properties containing chromophore organic groups or NLO-chromophores. The NLO effect (electrooptical coefficient) depends on the chromophore molecules hyperpolarizability, their concentration and orientation in a polymer matrix. Polymer matrix selection is very important, because it determines the number of essential properties of the material. The following basic requirements are set for polymer matrix: the polymer should be optically permeable at the given spectral area, so that the signal is not distorted in any way; glass-transition temperature Tg of the polymer should be more than 100 °C, in order to increase the range of application temperature of the material; polymer should have an amorphous structure and a maximum level of light refractive index n, in order to reduce the loss of optical signal distribution; the polymer and chromophore should be soluble in the same solvent.

Traditionally the following optically permeable film forming polymers as NLO material polymer matrix are selected: polycarbonate (PC), polystyrene (PS) and polymethylmethacrylate (PMMA), as well as a variety of copolymers thereof with the chromophore groups [3,4,6] doped to the basic chain. These polymers can be effectively used for NLO material production, however the glass transition temperature (Tg) of these materials does not exceed 110 °C temperature for polystyrene and PMMA and 150 °C for PC, which leads to that due to thermal disorientation and symmetry center forming the materials are applicable only at low temperatures and quickly lose values of their original initial electrooptical coefficient. Mostly PMMA [6-10] as polymer is used, on the basis of which the change of properties of the material obtained in the relaxation processes is studied in detail [10].

There is known a polymer film No. 401, described in US8159738 B2, which is *host-guest* polymeric system, characterized by suitable electro-optic coefficient and low thermal stability, leading to rapid lose of the properties, obtained in the course of poling when temperature is increased. The host-guest polymeric system deficiencies are determined by: low glass transition temperature of PMMA, and rapid decrease of glass transition temperature after DMABI adding. The disadvantages cannot be overcome without the use of another host-polymer, which glass transition temperature would be significantly higher.

### Disclosure of the Invention

The aim of the invention is to find industrially manufactured polymer that would allow eliminating disadvantages of the host-guest system associated with the lack of high T_{g} characteristics.

In order to overcome disadvantages of the traditional host-guest system the polysulfone (182443 Aldrich, Polysulfone, average Mₙ ∼22,000) as a polymeric matrix is selected. Tg of polysulfone is 195°C and unlike the materials proposed in documents [3-10] and patent US8159738 B2, it allows in a simple way to obtain NLO material, characterized by high light refractive index *n* and greater stability characteristics at elevated temperatures. For the implementation of the invention polysulfone is proposed as ideal polymeric matrix for the so-called host-guest systems. Polysulfone (PSU) is an amorphous polymer, which is characterized by high thermal, electrical and mechanical properties. Polysulfone has increased resistance to hydrolysis, chemical exposure and vapour. Polysulfone has very high mechanical properties: a burst strength and modulus of elasticity. By nature, polysulfone is dielectric. Polysulfone has excellent optical properties and high enough light refraction (around n = 1.6). Polysulfone is resistant to thermal destruction, thermal oxidative destruction, and radiation. It should be noted that polysulfone is soluble in chlorinated hydrocarbons and amide solvents.

The aim of the proposed invention is achieved by creating a new NLO polymeric material by means of using polymer polysulfone (PSU) as a matrix: 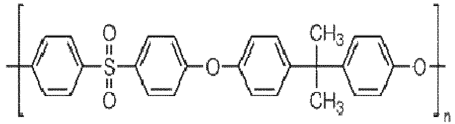 and introducing therein selected N,N- dimethyl-amino-benzylidene 1.3- indandione (DMABI): 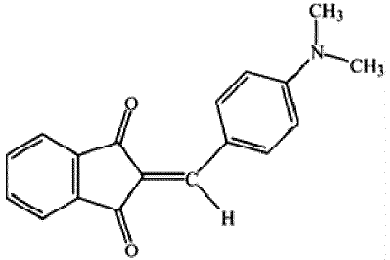 chromophore, or any other NLO chromophore.

### Brief Description of Drawings

Fig. 1 - PSU/DMABI samples preparation scheme;
Fig. 2 - shows PSU/DMABI D33 SHG coefficient dependence on DMABI content;
Fig. 3 - PSU/DMABI OHG disorientation;
Fig. 4 - PMMA/DMABI OHG disorientation.

When introducing different amounts of chromophore and by giving chromophore molecules a determined spatial orientation in the result of poling them in electric field an elevated NLO stability is obtained, which is significantly longer than the closest prior art retains its characteristics. DMABI content in a PSU matrix is selected taking into account the information on DMABI plasticizing and agglomeration effect in other polymer matrices [2-6] and is equal to 1, 5, 10 and 15 % by weigh.

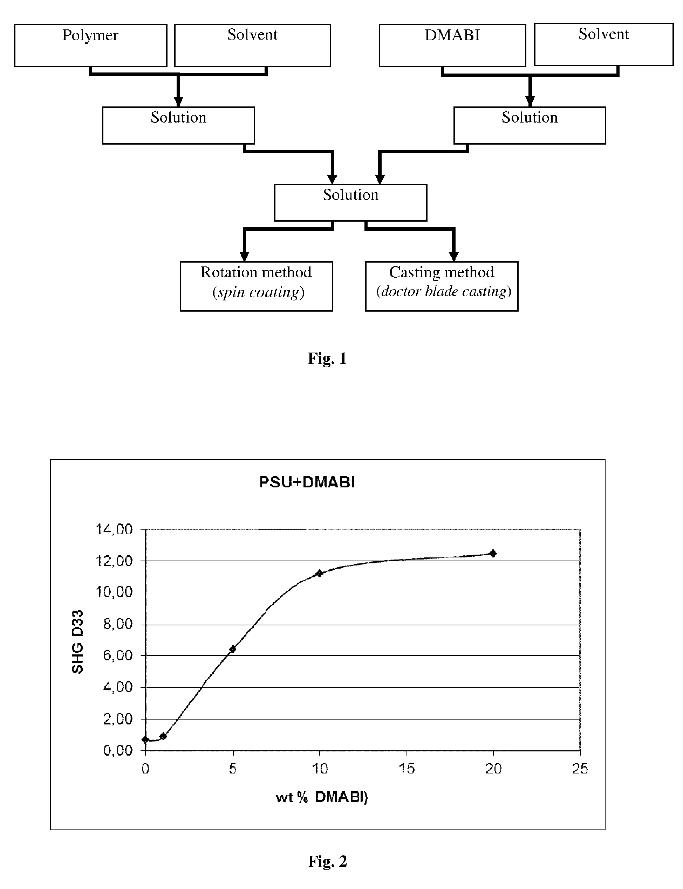

The process of obtaining optically active PSU matrix material, i.e. having NLO effect, is schematically shown in Fig. 1 and like in the case of US8159738 B2 includes the following steps:
- a dissolution of polymer in an appropriate solvent; the PSU is dissolved in chloroform and/or chlorobenzene at 40-50°C temperature in a flask with a stirrer; a solution 3-6% (w/w) is prepared, to which DMABI solution in chloroform is added;
- DMABI solution in chloroform is prepared;
- the prepared polymer and DMABI solutions are mixed in a set ratio;
- the resulting polymer-DMABI solution is applied on conductive glass substrate, ie. ITO glass (indium tin oxide coated glass), using two different methods: rotation (spin coating-[11]) method and casting method [12] according to "doctor blade casting" principle.

### Example of the Implementation of the Invention:

The following example illustrates the essence of the invention, but in no way limits its use. Characteristics of the systems obtained as a result of implementation of the invention are summarized in Table 1.

3 g PSU are dissolved in 40 ml chloroform so that 4% w/w PSU solution is prepared. Polymer-DMABI solutions are obtained by mixing 4 ml PSU solution and DMABI solutions of appropriate concentration, being obtained in the following way:
1.1. to produce 1% DMABI solution 0.29 mg DMABI is dissolved in 0.0015 ml chloroform;
1.2. to produce 5% DMABI solution 1.32 mg DMABI is dissolved in 0.0065 ml chloroform;
1.3. to produce 10% DMABI solution 2.71 mg DMABI is dissolved in 0. 0135 ml chloroform;
1.4. to produce 20% DMABI solution 6.11 mg DMABI is dissolved in 0. 03 ml chloroform.
For comparison, the solutions of polymer-DMABI mixture were prepared in the same way, where PMMA (solutions 2.1; 2.2.; 2.3.; 2.4.) as polymer matrix was used.

After obtaining the solutions, film casting on ITO glass substrate was made by rotation method or casting method. 2 ml of the previously prepared solution (solutions 1.1.-1.4. and 2.1.-2.4.) were deposited on ITO glass and evened along all the surface of ITO glass substrate.

For the rotation method the following technological parameters were used: acceleration - 800 rev/min, speed 900 rev/ min, and the rotation time 3 seconds.

After application, the samples were dried for 3 days at 20 °C temperature. Poling of samples and fixation of their characteristics was carried out as set forth in [6].

PSU/DMABI poling was carried out by heating the sample above the polymer Tg (see Table 1), using "Corona Poling" equipment in the electric field 2500 ±100 V. The polarized PSU/DMABI second harmonic generation research was implemented, using computerized experimental apparatus [13]. Laser radiation source - "actively Q-switched Nd:YAG laser" with λ=1.064 µm, 150ns pulse and 2-kHz frequency. The measurement accuracy was determined by comparison with the standard: "Maker fringes" x-cut quartz (d11=0.3 pm/V). The second harmonic signal is shown in Fig. 2 as coefficient SHG D33 dependence from the content of DMABI. When DMABI concentration increases the coefficient SHG D33 increases until it reaches saturation at 10-15 % by weight.

For the determination of light refractive index n before and after PSU/DMABI orientation radiation with a wavelength of 532 nm and 1064 nm was used (see Table 1). Light refractive index absolute values increase with increasing of DMABI content.

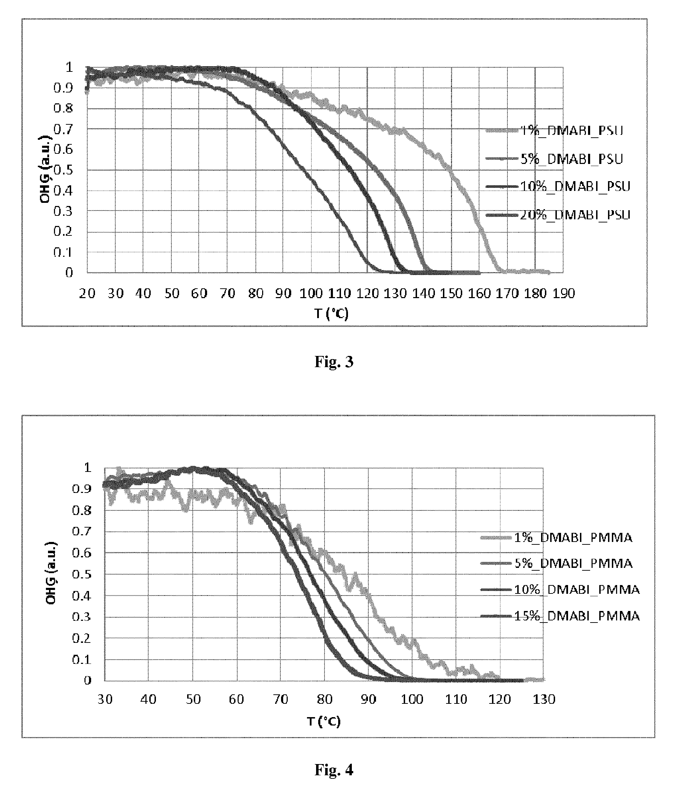

The stability of the NLO effect obtained in the result of poling is shown as SHG D33 temperature dependence (see Fig. 3). As it can be seen from the data in Fig. 3 and Table 1, the host-guest systems' stability decreases with increasing chromophore concentration while the PSU materials in all cases are characterized by a significantly higher stability than PMMA materials (Fig. 4.). As shown by the data in Table 1, by using PSU the increase of stability for 1.4-1.6 times is achieved. When chromophore concentration increases, the positive effect of the polymer matrix slightly decreases.

**Table 1**

| Characteristics of PSU/DMABI | | | | | | |
|---|---|---|---|---|---|---|
| DMABI, wt% | Designation | Polymer | 50% SHG; 10 °C/min | Increase of stability T1/T2* | n, 532 nm | n, 1064 nm |
| 0 | 1.0 | PSU | 155.9 | 1.57 | 1.63 | 1.52 |
| 1 | 1.1 | PSU | 151.4 | 1.55 | 1.65 | 1.53 |
| 5 | 1.2 | PSU | 123.9 | 1.45 | 1.74 | 1.57 |
| 10 | 1.3 | PSU | 114.9 | 1.42 | 1.84 | 1.59 |
| 20 | 1.4 | PSU | 98.0 | 1.36 | 2.05 | 1.66 |
| 0 | 2.0 | PMMA | 90.3 | | 1.49 | 1.48 |
| 1 | 2.1 | PMMA | 80.9 | | 1.51 | 1.48 |
| 5 | 2.2 | PMMA | 77.3 | | 1.53 | 1.49 |
| 10 | 2.3 | PMMA | 74.2 | | 1.60 | 1.50 |
| 20 | 2.4 | PMMA | 90.3 | | 1.65 | 1.51 |

| | | | | | | |
|---|---|---|---|---|---|---|
| *T- the absolute temperature | | | | | | |

The substantiation of the industrial applicability of the invention: the scope use of polymeric electrooptic materials in different devices adapted for information transmission, fixing and processing continues to increase. More rapid increase of use of these materials is hindered by insufficient thermal stability of these materials, which results in decrease of electrooptic activity in the course of exploitation. This deficiency can be eliminated by using host-polymers with higher glass transition temperature and thermal stability. The proposed solution significantly improves the guest-host (host-guest) polymeric electro-optical characteristics at elevated temperatures and can be used for production of a variety of devices, such as electro-modulators.

### Sources of Information

[1] Xiaoxi Z. The effect of In3+ doping on optical properties of Fe:LiNBO3 crystals. Optik-International Journal for Light and Electron Optics, 116, 361-364 (2005).
[2] Cho M. J., Choi D. H., Sullivan P. A., Akelaitis A. J. P., Dalton L. R. Recent progress in second-order nonlinear optical polymers and dendrimers. Progress in Polymer Science, 33, 1013-1058 (2008).
[3] Michiharu Yamamoto (Meth)acrylate polymer and non-linear optical device material composition, Patent US7317058 B2.
[4] Banach M. J., Alexander M. D., Caracci S., Vaia R. A. Enhancement of Electrooptic Coefficient of Doped Films through Optimization of Chromophore Environment. Chemistry of Materials, 11, 2554-2561 (1999).
[5] Kaspars Traskovskis K., Mihailovs I., Tokmakovs A., Jurgis A., Kokars V., Rutkis M. Triphenyl moieties as building blocks for obtaining molecular glasses with nonlinear optical activity. J. Mater. Chem., 22, 11268-11276 (2012).
[6] Stiller B., Saphiannikova M., Morawetz K., Ilnytskyi J., Neher D., Muzikante I., et al. Polymers films with indandione derivatives as alternatives to azobenzene polymers for optical patterning. Thin Solid Films, 516, 8893-8898 (2008).
[7] Schildknecht C., Ginev G., Kammoun A., Riedl T.; Kowalsky W., et al. Novel deep-blue emitting phosphorescent emitter, Proc. SPIE 5937, Organic Light-Emitting Materials and Devices IX, 59370E (October 08, 2005); doi:10.1117/12.614331.
[8] Jianhua Zhou, Lilin Huang, Baiqiang You, Weifeng Lin. Research on Corona Poling for PMMA/DR1 Host-Guest polymer films. Proceedings - IEEE International Symposium on Photonics and Optoelectronics, Chendu, China. SOPO 2010, p. 5504359 EI:20103013104256.
[9] Robert C. Hoffman, Timothy Pritchett. Large aperture polymer electro-optic shutter device and method of manufacturing same US8159738 B2 ari̅ ka̅ US8363300, US20100321756, US20120170099.
[10] Goyal1 R.K., Damkale S.R., Mulik U.P., Negi Y.S., Dadge J. W., Aiyer R.C. SHG relaxation behaviour in m-nitroaniline doped PMMA guest-host system. Adv. Mat. Lett. 1(3), 264-268 (2010).
[11] Hall, D. B., Underhill, P. and Torkelson, J. M. (1998), Spin coating of thin and ultrathin polymer films. Polym Eng Sci, 38: 2039-2045.
[12] Sol-gel technologies for glass producers and users / ed. by Michel A. Aegerter u.a. - Dordrecht [u.a.] : Kluwer, 2004, S. 89-92
[13] Tokmakovs A., Rutkis M., Traskovskis K., Zarins E., Laipniece L., Kokars V., Kampars V. Nonlinear optical properties of low molecular organic glasses formed by triphenyl modified chromophores. IOP Conf. Series: Materials Science and Engineering 38 (2012) 012034doi:10.1088/1757-899X/38/1/012034.

## Claims

1. A method for producing of polymeric guest-host systems with nonlinear optical properties, using polymer matrix and low molecular nonlinear organic chromophore, **characterized in that** as a polymer polysulfone is used:

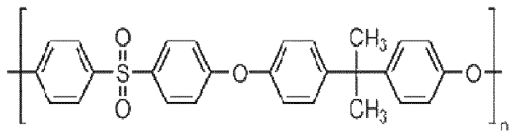

2. The method according to claim 1, **characterized in that** for the producing of polymer-chromophore solution chloroform as a solvent is used.

3. The method according to claim 1 or 2, **characterized in that** said system is produced by using rotation - "spin coating" or casting - "doctor blade casting" methods.

4. The method according to any one of the claims from 1 to 3, **characterized in that** poling in the electric field is carried out at temperature, higher than the glass transition temperature.

5. A thermally stable guest-host system nonlinear optical material comprising a polymer matrix and an organic low molecular weight non-linear chromophore, wherein the polymer matrix is polysulfone.
